(19) Europäisches Patentamt
European Patent Office
Office européen des brevets

(11) **EP 2 829 365 B1**

(12) **EUROPÄISCHE PATENTSCHRIFT**

(45) Veröffentlichungstag und Bekanntmachung des Hinweises auf die Patenterteilung:
**03.03.2021  Patentblatt 2021/09**

(51) Int Cl.:
**B25J 9/16** (2006.01)     **B25J 19/00** (2006.01)

(21) Anmeldenummer: **14002391.2**

(22) Anmeldetag: **11.07.2014**

(54) **Verfahren und Vorrichtung zum Bremsen einer Roboterachsanordnung**

Method and device for braking a robot axis assembly

Procédé et dispositif destinés au freinage d'un système d'axe de robot

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2013  DE 102013012448**

(43) Veröffentlichungstag der Anmeldung:
**28.01.2015  Patentblatt 2015/05**

(73) Patentinhaber: **KUKA Deutschland GmbH**
**86165 Augsburg (DE)**

(72) Erfinder:
 • **Keyl, Hartmut**
  **86161 Augsburg (DE)**
 • **Thümmel, Michael**
  **86163 Augsburg (DE)**
 • **Tscharnuter, Dietmar**
  **86316 Friedberg (DE)**

 • **Weiser, Tobias**
  **89312 Günzburg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 1 905 552          WO-A1-01/62449**
**DE-A1-102008 027 754     JP-A- H06 262 565**

 • **YASUHIRO MINAMIYAMA ET AL: "Positioning of rotary pneumatic actuator by passive dynamic control", SYSTEM INTEGRATION (SII), 2012 IEEE/SICE INTERNATIONAL SYMPOSIUM ON, IEEE, 16. Dezember 2012 (2012-12-16), Seiten 692-697, XP032323540, DOI: 10.1109/SII.2012.6427367 ISBN: 978-1-4673-1496-1**

EP 2 829 365 B1

**Beschreibung**

Die vorliegende Erfindung betrifft ein Verfahren zum Bremsen einer Roboterachsanordnung sowie eine Roboterachsanordnung und ein Computerprogrammprodukt zur Durchführung eines solchen Verfahrens.

Roboter weisen eine Roboterachsanordnung mit einer oder mehreren Roboter(bewegungs)achsen auf. Diese werden durch Antriebe aktuiert, um den Roboter zu bewegen und beispielsweise mit einem roboterfesten Referenzpunkt wie dem TCP ("Tool Center Point") eine vorgegebene Bahn abzufahren. Um eine Achse abzubremsen, prägt im normalen Betrieb der Antrieb ein gegensinniges Antriebsmoment auf.

Zusätzlich kann eine Roboterachse eine Bremse aufweisen, um die stillstehende Achse bei energielosem Antrieb festzulegen.

Bei einer Betriebsausnahme, beispielsweise einem Notstop, wird nach betriebsinterner Praxis der Antrieb von einer Energieversorgung getrennt und zugleich diese zusätzliche Bremse rasch geschlossen, um die Achse schnell und zuverlässig stillzusetzen. Dabei können die Struktur des Roboters und/oder die Bremse, die in der Regel nur zum Festlegen der stillstehenden Achse ausgelegt ist, dynamisch hochbelastet werden. Zusätzlich oder alternativ können Bremsen, insbesondere aufgrund von Fertigungs- und/oder Montagetoleranzen, in ihrer Wirkung streuen und so zu einer hohen Belastung führen.

Aus der EP 1905552A1 ist ein Roboter bekannt, der wenigstens zwei relativ zueinander bewegliche Teile, Antriebe zur Realisierung von wenigstens zwei separate Bewegungen zwischen den Teilen, wenigstens zwei separate Bremsen, um einer der wenigstens zwei separaten Bewegungen entgegenzuarbeiten, und eine Steuervorrichtung aufweist, die mit den Bremsen verbunden und dazu eingerichtet ist, wenigstens eine der Bremsen zu aktivieren, während die andere inaktiv bleibt.

Die WO 01/62449 A1 offenbart eine Permanentmagnet-Bremssystem, das aus einem ersten Körper mit einer aktiven Fläche und einem zweiten Körper mit einer aktiven Fläche besteht, wobei sich zwischen der ersten und zweiten aktiven Fläche Fluid befindet, da ein Magnetfeld aktiviert, wen die Bremse aktiviert wird.

Aus der JP H06-262565 ist ein System bekannt, das einen Bremsmechanismus, der in der Lage ist, die Größe eines Bremsdrehmoments durch Ändern eines Steuerwertes zu verändern, ein Zustandserfassungsteil, das erfasst, ob der Bremsmechanismus sich in einem Brems- oder Haltezustand befindet, ein Speicherteil, das den Steuerwert speichert, und ein Bewegungskontrollbetriebsteil aufweist, das den zu speichernden Steuerwert angibt.

Der Artikel Y. Minamiyama; T. Kiyota: "Positioning of Rotary Pneumatic Actuator by Passive Dynamic Control"; 2012 IEEE/SICE Int. Symp. on Systems Integration, betrifft die passive dynamische Kontrolle (PDC), die auf einem inherent sicheren Design basiert und positiv ein passives Element nutzt, dessen Charaktertistik variabel ist. Im Artikel wird die PDC auf einen pneumatischen Drehaktuator angewendet, der mit einer elektromagnetischen Bremse ausgestattet wird. Ein Sensor zur Anwendung der PDC wird vorgeschlagen und sein Regelverfahren beschrieben. Dann werden eine Positionsregelung und eine Nachfolgeregelung einer Sinuskurve gezeigt und die Effektivität der PDC zur oszilierenden Bewegung durch Experimente untersucht.

Aufgabe der vorliegenden Erfindung ist es, ein Bremsen einer Roboterachsanordnung, insbesondere bis zu einem Stillstand, zu verbessern.

Diese Aufgabe wird durch ein Verfahren mit den Merkmalen des Anspruchs 1 gelöst. Anspruch 9 stellt eine entsprechende Roboterachsanordnung unter Schutz, Anspruch 14 ein Computerprogrammprodukt, insbesondere einen maschinenlesbaren Datenträger, zur Durchführung eines solchen Verfahrens. Die Unteransprüche betreffen vorteilhafte Weiterbildungen.

Nach einem Aspekt der vorliegenden Erfindung umfasst eine Roboterachsanordnung eine einzige oder mehrere, insbesondere alle, Roboterachsen eines oder mehrerer Roboter, insbesondere wenigstens eines sechs- oder mehrachsigen Industrie- oder Leichtbauroboters.

Eine Roboterachse weist ein Abtriebsglied auf, welches in einer Ausführung dreh- und/oder axialfest mit einem Roboterglied dauerhaft oder lösbar verbunden ist. Insbesondere kann das eine Roboterglied mittels des Abtriebsglieds dreh- und/oder verschiebbar an einem weiteren Roboterglied gelagert und/oder gegen dieses bewegbar sein.

Die Roboterachse weist einen Antrieb zum Aufprägen einer Antriebskraft auf das Abtriebsglied auf. Der Antrieb kann insbesondere ein oder mehrere, insbesondere mechanisch parallel oder in Serie gekoppelte, Elektromotoren aufweisen. Zusätzlich oder alternativ kann der Antrieb ein Getriebe, insbesondere ein Stirnradgetriebe, vorzugsweise Planetengetriebe, und/oder Gleitkeilgetriebe bzw.

(Spannungs)Well(en)getriebe ("Strain Wave Gear" SWG) mit einem elastischen Übertragungselement, insbesondere ein sogenanntes Harmonie Drive Getriebe, aufweisen. Das Abtriebsglied kann insbesondere der Rotor oder Stator eines Elektromotors des Antriebs oder eine Abtriebswelle, insbesondere ein Außenring, eines Getriebes des Antriebs aufweisen, insbesondere sein.

Die Roboterachse weist eine zusätzliche Bremse zum Aufprägen einer Bremskraft auf das Abtriebsglied auf. Die Bremse kann insbesondere eine Haltebremse zum Festlegen des Abtriebsglieds aufweisen, insbesondere sein. In einer Ausführung ist die Bremse eine energielos geschlossene Bremse, die im normalen Betrieb durch aktive Aktuierung, beispielsweise Energieversorgung wenigstens eines Elektromagneten, geöffnet bzw. gelüftet wird bzw. ist. Die Bremse kann insbesondere eine (elektro)mechanische, hydraulische oder pneumatische Bremse aufweisen, insbesondere sein. In einer Ausführung weist die Bremse ein Federmittel zum Verspannen zweier Bremsglieder gegeneinander und einen, insbesondere elektromagnetischen und/oder -motorischen, Aktuator zum Beabstanden der Bremsglieder voneinander bzw. zum aktiven Lüften der Bremse auf. In einer Ausführung ist die Bremse zwischen Antriebsmotor und -getriebe angeordnet, in einer anderen Ausführung auf einer getriebeabgewandten Seite eines Antriebsmotors oder einer motorabgewandten Seite eines Antriebsgetriebes.

Nach einem Aspekt der vorliegenden Erfindung weist die Roboterachsanordnung ein Steuermittel zum Steuern der Antriebskraft und/oder der Bremskraft einer einzigen oder mehrerer, insbesondere aller, Achsen der Roboterachsanordnung auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den bzw. die Achsantrieb(e) und/oder Bremse(n) steuern kann.

Das Steuermittel kann insbesondere eine Robotersteuerung des Roboters mit den Achsen der Roboterachsanordnung sein. Gleichermaßen kann das Steuermittel zum Steuern der Antriebs- und/oder der Bremskraft nur einer einzigen Achse ausgebildet und in einem Roboterglied angeordnet sein, in dem der Antrieb und/oder die Bremse angeordnet ist. Hierdurch werden lange Kommunikationswege vermieden und die Steuerung zur Vermeidung bzw. Reduzierung hoher Belastungen kann achsweise und direkt erfolgen.

Unter einem Steuern wird im Sinne der vorliegenden Erfindung insbesondere ein Kommandieren bzw. Aktuieren ausschließlich auf Basis einer vorgegebenen ein- oder mehrdimensionalen Größe ("feedforward control") verstanden. In einer bevorzugten Ausführung kann ein Steuern im Sinne der vorliegenden Erfindung insbesondere auch ein Regeln sein, d.h. ein Kommandieren bzw. Aktuieren auf Basis eines Vergleiches einer vorgegebenen ein- oder mehrdimensionalen Größe mit einer ermittelten Ist-Größe ("feedback control"). Beides wird vorliegend zur kompakteren Darstellung allgemein als Steuern bezeichnet.

Nach einem Aspekt der vorliegenden Erfindung wird zum Bremsen der Roboterachsanordnung, insbesondere durch das Steuermittel, auf eine oder mehrere Abtriebsglieder durch die auf diese(s) wirkende(n) Bremse(n) jeweils eine Bremskraft aufgeprägt. Die Bremskraft kann insbesondere auf das bewegte Abtriebsglied aufgeprägt werden, um dieses abzubremsen, insbesondere stillzusetzen. In einer Ausführung wird die Bremskraft auf Basis einer Betriebsausnahme aufgeprägt. Eine Betriebsausnahme im Sinne der vorliegenden Erfindung kann insbesondere ein von einem normalen Betrieb, insbesondere einem Abfahren einer vorgegebenen Arbeitsbahn, abweichender Zustand sein, insbesondere ein außerplanmäßiges Stillsetzen, etwa infolge eines Notstops, einer Sicherheitsüberwachung oder dergleichen.

In einer Ausführung wird somit eine zusätzliche Bremse, insbesondere eine Haltebremse, zum Abbremsen, insbesondere Stillsetzen, wenigstens einer Achse eines Roboters geschlossen, beispielsweise infolge eines Notstops.

Insbesondere in einer solchen Situation kann die Struktur des Roboters und/oder der Bremse(n), insbesondere eine Lagerung und/oder Befestigung, bisher dynamisch hochbelastet werden: fällt die Bremse ein, wird das Abtriebsglied kurzfristig mit der vollen Trägheit der Achse belastet, insbesondere eines sich mit hoher Geschwindigkeit bewegenden massiven Robotergliieds bzw. damit verbundener weiterer Roboterglieder. Insbesondere aufgrund von Fertigungs- und/oder Montagetoleranzen kann dabei eine Bremswirkung in einem verhältnismäßig großen Bereich streuen, so dass bei einzelnen Bremsen sehr hohe Belastungen auftreten können.

Nach einem Aspekt der vorliegenden Erfindung wird bei geschlossener Bremse bzw. beim Bremsen einer oder mehrerer Achsen bzw. Abtriebsglieder durch die jeweilige zusätzliche Bremse, insbesondere während des gesamten Bremsens bis zu einem Stillstand der Achse oder wenigstens abschnittsweise während des Bremsens, die Antriebskraft des jeweiligen, auf das Abtriebsglied wirkenden Antriebs auf Basis einer dynamischen Größe des Abtriebsglieds gesteuert, welche von der Bremskraft abhängt. In einer Weiterbildung wird die Antriebskraft zusätzlich auch vor und/oder nach dem Bremsen der Achse(n) bzw. Abtriebsglieder durch die jeweilige zusätzliche Bremse bzw. zusätzlich auch bei, insbesondere trägheits- oder fehlerbedingt, noch nicht oder schon wieder geöffneter Bremse auf Basis einer dynamischen Größe des Abtriebsglieds gesteuert, welche von der Bremskraft abhängt.

In einer Ausführung wird der Antrieb, wenigstens abschnittsweise während des Bremsens, gegensinnig zur Bremse bzw. die Achse beschleunigend gesteuert, um eine Verzögerung und damit eine Belastung der Struktur und/oder Bremse zu reduzieren, d.h. der Bremswirkung entgegenzuarbeiten. Da sich im Abtriebsglied Antriebs- und Bremskraft summieren, kann die Gesamtbelastung dadurch entsprechend reduziert werden. In einer anderen Ausführung wird der Antrieb, wenigstens abschnittsweise während des Bremsens, gleichsinnig zur Bremse bzw. die Achse verzögernd gesteuert, um ebenfalls eine Bremswirkung auszuüben und damit eine Belastung der Bremse zu reduzieren. In einer Weiterbildung können diese beiden Ausführungen kombiniert sein bzw. der Antrieb während wenigstens einem Abschnitt des Bremsens gegensinnig zur Bremse und in wenigstens einem hiervon verschiedenen bzw. zeitlich beabstandeten Abschnitt des Bremsens gleichsinnig zur Bremse gesteuert werden. Hierdurch kann in einer Ausführung, insbesondere in einem Abschnitt, in dem die Bremse, beispielsweise infolge Erwärmung, eine hohe Bremskraft ausübt und so insbesondere den Roboter belastet, ihre Bremswirkung und damit die Belastung reduziert und in einem anderen Abschnitt, in dem die, beispielsweise noch kalte, Bremse eine geringe Bremskraft ausübt und so insbesondere den Bremsweg verlängert, ihre Bremswirkung verstärkt und so der Bremsweg verkürzt werden. Gleichermaßen kann in einer anderen Ausführung nur ein gleichsinniges Wirken des Antriebs zur Bremse bzw. eine Bremskraftverstärkung vorgesehen sein, insbesondere, um einen erhöhten Verschleiß der Bremse durch einen gegensinnig wirkenden Antrieb und/oder eine Verlängerung des Bremsweges zu vermeiden.

Ein Steuern der Antriebskraft kann insbesondere vorteilhaft sein, wenn die Bremse eine binäre Bremse ist, die nur zwischen einem geöffneten und einem geschlossenen Zustand umgeschaltet werden kann, ohne ihre Bremskraft dazwischen vorgeben zu können.

Zusätzlich oder alternativ zu einem Steuern der Antriebskraft wird in einer Ausführung, insbesondere während des gesamten Bremsens bis zu einem Stillstand der Achse oder wenigstens abschnittsweise während des Bremsens, die Bremskraft der jeweiligen, auf das Abtriebsglied wirkenden Bremse auf Basis einer dynamischen Größe des Abtriebsglieds gesteuert, welche von der Bremskraft abhängt, insbesondere auf Basis derselben dynamischen Größe, auf deren Basis auch die Antriebskraft gesteuert wird. So kann in einer Ausführung die Bremskraft begrenzt oder, wenigstens phasenweise, reduziert werden, um eine Belastung der Struktur und/oder Bremse zu reduzieren.

Durch entsprechendes Steuern der Antriebs- und/oder der Bremskraft kann in einer Ausführung eine, insbesondere maximale, Verzögerung der Roboterachse reduziert werden. Insbesondere beim Stillsetzen schnell bewegter Achsen kann dies eine Belastung der Struktur und/oder Bremse reduzieren. Zusätzlich oder alternativ kann eine Bremswirkung auf Antrieb und Bremse aufgeteilt und so die Bremse selber entlastet werden.

In einer Ausführung kann die ein- oder mehrdimensionale dynamische Größe eine Kraft umfassen, insbesondere sein, die auf das oder in dem Abtriebsglied wirkt oder von diesem ausgeübt wird. Eine Kraft im Sinne der vorliegenden Erfindung kann in einer Ausführung auch ein antiparalleles Kräftepaar, d.h. ein Drehmoment umfassen, insbesondere sein, welches zur kompakteren Darstellung vorliegend verallgemeinernd als Kraft bezeichnet wird.

Indem eine Antriebs- und/oder eine Bremskraft auf Basis einer Kraft des Abtriebsglieds gesteuert wird, kann diese Kraft und damit auch eine Belastung der Struktur des Roboters und/oder der Bremse reduziert werden.

Zusätzlich oder alternativ kann die dynamische Größe eine ein- oder mehrdimensionale Bewegungsgröße des Abtriebsglieds umfassen, insbesondere sein, insbesondere eine Geschwindigkeit $\omega(t)$, eine Beschleunigung $d\omega/dt$, ein Ruck $d^2\omega/dt^2$ und/oder eine höhere Zeitableitung. Eine Belastung beim Abbremsen durch die Bremse hängt von einer Verzögerung ab, insbesondere von einem Geschwindigkeitsverlauf bzw. dabei auftretenden Rucken bzw. Beschleunigungsänderungen. Somit kann, insbesondere auf Basis eines Modells, auch durch Ermitteln einer Bewegungsgröße eine Belastung abgeschätzt bzw. durch Steuern auf Basis der Bewegungsgröße eine Belastung reduziert werden.

In einer Ausführung wird die Antriebs- und/oder die Bremskraft auf Basis einer Differenz zwischen der dynamischen Größe und einem vorgegebenen Grenzwert gesteuert, insbesondere derart, dass ein, insbesondere betragsmäßiges, Überschreiten des Grenzwerts vermieden, verkürzt und/oder reduziert wird. In einer Weiterbildung kann der ein- oder mehrdimensionale Grenzwert eine vorgegebene Maximallast, insbesondere -kraft, insbesondere ein maximales Drehmoment, des Abtriebsglieds umfassen, insbesondere sein. Dann kann in einer Ausführung der Antrieb und/oder die Bremse so gesteuert werden, dass eine tatsächliche bzw. Ist-Last diese Maximallast während des Bremsens nicht überschreitet, nur kurzzeitig überschreitet oder möglichst wenig überschreitet. Ein maximales Drehmoment kann in einer Ausführung maximal 1000 Nm, insbesondere 600 Nm, vorzugsweise maximal 100 Nm betragen, insbesondere bei einem Leichtbauroboter. Insbesondere bei einem Industrieroboter kann ein maximales Drehmoment in einer Ausführung maximal 50.000 Nm, insbesondere maximal 10.000 Nm betragen.

Zusätzlich oder alternativ kann der Grenzwert eine vorgegebene ein- oder mehrdimensionale maximale Bewegungsgröße, insbesondere Beschleunigung, des Abtriebsglieds umfassen, insbesondere sein. Dann kann in einer Ausführung der Antrieb und/oder die Bremse so gesteuert werden, dass eine tatsächliche bzw. Ist-Bewegungsgröße diesen Maximalwert während des Bremsens betragsmäßig nicht überschreitet, nur kurzzeitig überschreitet oder möglichst wenig überschreitet.

Der Grenzwert kann fest vorgegeben, einstellbar oder variabel sein. In einer Ausführung umfasst der Grenzwert eine Kraft, die auf das oder in dem Abtriebsglied wirken oder von diesem ausgeübt werden soll, insbesondere ein Soll-Bremsmoment. Somit wird auch ein zu erreichender Sollwert zur kompakteren Darstellung verallgemeinernd als Grenzwert bezeichnet.

Der Grenzwert wird in einer Weiterbildung auf Basis einer Bewegungsgröße des Abtriebsglieds, insbesondere einer Differenz zwischen einer Soll-und einer Ist-Bewegungsgröße des Abtriebsglieds vorgegeben. Insbesondere kann ein Drehzahlregler ein Soll-Bremsmoment vorgeben, um eine Soll-Drehzahl zu erreichen, insbesondere die Drehzahl auf Null zu reduzieren, vorzugsweise eine Bremsrampe abzufahren. Auf Basis der Differenz zwischen dem Grenzwert, insbesondere diesem Soll-Bremsmoment, und einer auf das oder in dem Abtriebsglied wirkenden oder von diesem ausgeübten Kraft wird dann die Antriebs- und/oder Bremskraft gesteuert.

In einer Ausführung kann eine Antriebs- und/oder eine Bremskraft proportional zu einer Differenz zwischen der dynamischen Größe und einem vorgegebenen Grenzwert und/oder einer Zeitableitung und/oder einem Zeitintergral dieser Differenz gesteuert werden, insbesondere also durch eine Proportional-, Integral- und/oder Differentialregelung. Zusätzlich oder alternativ kann die Antriebs- und/oder die Bremskraft auf Basis eines Modells der Roboterachsanordnung gesteuert werden. Hierdurch kann in einer Ausführung die Dynamik der Roboterachsanordnung, insbesondere deren Trägheit, berücksichtigt werden.

In einer Ausführung wird die dynamische Größe in sicherer Technik ermittelt, insbesondere redundant, vorzugsweise diversitär. Zusätzlich oder alternativ können die Antriebs- und/oder die Bremskraft in sicherer Technik gesteuert oder wenigstens Steuergrößen zum Steuern der Antriebs- und/oder die Bremskraft, insbesondere Soll-und/oder Stellwerte in sicherer Technik ermittelt werden. Während eine Steuerung der Antriebs- bzw. Bremskraft in sicherer Technik sichere Antriebe bzw. Bremsen voraussetzt, kann anhand von in sicherer Technik ermittelter Steuergrößen vorteilhaft bereits mit geringerem Aufwand eine sichere Überwachung realisiert werden. Vorzugsweise wird die Antriebs- und/oder die Bremskraft mit einer Frequenz von wenigstens 100 Hz, vorzugsweise wenigstens 1 kHz, bevorzugt wenigstens 10 kHz gesteuert, um Belastungen der Struktur und/oder Bremse(n) frühzeitig auszuregeln.

Insbesondere können die Bremskraft und die Antriebskraft in parallelen Zweigen bzw. über parallele Kanäle gesteuert werden, so dass bei einem Ausfall eines Zweiges bzw. Kanals der andere Zweig bzw. Kanal weiterhin die Roboterachse(n) abbremsen kann. Fällt beispielsweise die Bremse aus, kann der Antrieb alleine die Roboterachse(n) abbremsen, insbesondere stillsetzen. Umgekehrt kann die Bremse alleine die Roboterachse(n) abbremsen, insbesondere stillsetzen, falls der Antrieb ausfällt oder fehlerbehaftet ist.

Der Antrieb und/oder die Bremse können in einer Ausführung in sicherer Technik überwacht werden, insbesondere eine von dem Antrieb und/oder der Bremse ausgeübte Kraft und/oder eine Bewegungsgröße, insbesondere Geschwindigkeit, des Abtriebsglieds. Diese Überwachung kann insbesondere ein Bilden eines Differenzwerts zwischen einer von dem Antrieb bzw. der Bremse ausgeübten Kraft und/oder Bewegungsgröße des Abtriebsglieds mit einem Erwartungswert, insbesondere einem vorgegebenen Grenzwert, und ein Vergleich dieses Differenzwerts mit einem Schwellwert umfassen. Bei einer Überschreitung dieses Schwellwerts wird in einer Ausführung einer der beiden parallelen Aktoren zur Stillsetzung der Achse kraftlos geschaltet. Dies kann insbesondere durch Lüften der Bremse oder durch Trennung der Energieversorgung des Antriebs erfolgen.

In einer Ausführung weist die Roboterachsanordnung ein Erfassungsmittel zum Ermitteln der dynamischen Größe einer oder mehrerer Abtriebsglieder auf. Das Erfassungsmittel kann insbesondere einen Kraftsensor, vorzugsweise einen Drehmomentsensor aufweisen, insbesondere sein, der in einer Ausführung mit dem Abtriebsglied wirkverbunden, insbesondere an diesem befestigt ist. Zusätzlich oder alternativ kann das Erfassungsmittel insbesondere einen Gelenkstellungs- und/oder Geschwindigkeits- und/oder Beschleunigungssensor, vorzugsweise ein Drehwinkelsensor aufweisen, insbesondere sein, der in einer Ausführung mit dem Abtriebsglied wirkverbunden, insbesondere an diesem befestigt ist.

In einer Ausführung ist das Erfassungsmittel abtriebsseitig, insbesondere auf einer motorabgewandten Seite eines Getriebes des Antriebs und/oder einer motor- und/oder -getriebeabgewandten Seite der Bremse angeordnet, insbesondere zwischen dem Abtriebsglied und einem durch dieses bewegten Roboterglied, beispielsweise einer Roboterschwinge oder -hand.

Weitere Vorteile und Merkmale ergeben sich aus den Unteransprüchen und den Ausführungsbeispielen. Hierzu zeigt, teilweise schematisiert:

Fig. 1: einen Teil einer Roboterachsanordnung nach einer Ausführung der vorliegenden Erfindung;

Fig. 2: ein Verfahren zum Bremsen der Roboterachsanordnung der Fig. 1 nach einer Ausführung der vorliegenden Erfindung;

Fig. 3: einen Teil eines Steuermittels der Roboterachsanordnung der Fig. 1 nach einer weiteren Ausführung der vorliegenden Erfindung; und

Fig. 4: Verläufe eines Drehmoments in der Roboterachsanordnung der Fig. 1.

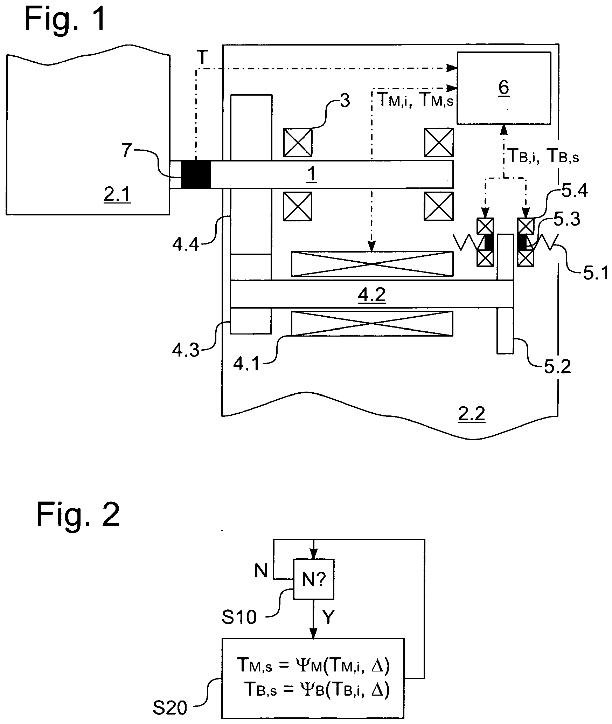

Fig. 1 zeigt eine Achse A einer Roboterachsanordnung nach einer Ausführung der vorliegenden Erfindung. Die Achse kann beispielsweise eine Grund- oder Armachse eines sechs- oder mehrachsigen Industrie- oder Leichtbauroboters sein. Weitere Achsen des im Übrigen nicht dargestellten Roboters können in gleicher Weise aufgebaut und gebremst werden bzw. sein wie nachfolgend mit Bezug auf die dargestellte Achse A beschrieben.

Die Roboterachse weist ein Abtriebsglied in Form einer Abtriebswelle 1 eines Getriebes 4.3, 4.4 eines Achsantriebs auf, die dreh- und axialfest mit einem Roboterglied 2.1 verbunden ist, das mittels der Abtriebswelle über Lager 3 drehbar an einem weiteren Roboterglied 2.2 gelagert ist.

Zum Aufprägen einer Antriebskraft auf die Abtriebswelle ist ein Elektromotor mit einem Stator 4.1 und einem Rotor 4.2 vorgesehen, der durch Zahnräder 4.3, 4.4 des Getriebes mit der Abtriebswelle 1 gekoppelt ist.

Zum Aufprägen einer Bremskraft auf die Abtriebswelle ist eine zusätzliche Bremse mit einem Federmittel 5.1 zum Verspannen eines rotorfesten Bremsgliedes in Form einer Bremsscheibe 5.2 und eines mehrteiligen Bremsgliedes in Form von Bremsbelägen 5.3 gegeneinander und einen elektromagnetischen Aktuator 5.4 zum Beabstanden der Bremsglieder 5.2, 5.3 voneinander bzw. zum aktiven geregelten Lüften der Bremse auf einer getriebeabgewandten Seite (rechts in Fig. 1) des Antriebsmotors 3.1, 3.2 angeordnet.

In einer nicht dargestellten Abwandlung kann die Bremse zwischen Antriebsmotor und Getriebe oder auf einer motorabgewandten Seite eines Antriebsgetriebes (links in Fig. 1) angeordnet sein. Zusätzlich oder alternativ kann das Getriebe als Harmonic Drive Getriebe ausgebildet sein.

Die Bremse ist als Haltebremse zum Festlegen der Abtriebswelle 1 als energielos geschlossene Bremse ausgebildet, die im normalen Betrieb durch Energieversorgung der Elektromagneten 5.4 geöffnet bzw. gelüftet ist.

Ein Steuermittel zum Steuern der Antriebskraft und/oder der Bremskraft der Achse A des Roboters ist in einer Achssteuerung 6 implementiert, die in dem weiteren Roboterglied 2.2 angeordnet ist, in dem der Antrieb und die Bremse angeordnet sind.

Ein Erfassungsmittel in Form eines Drehmomentsensors 7 zum Ermitteln einer dynamischen Größe in Form eines Drehmoments T ist zwischen den Roboterglied 2.1 und der Abtriebswelle 1 angeordnet, an dieser befestigt und mit der Achssteuerung 6 signalverbunden. Sowohl die Drehmomentermittlung als auch die Steuerung des Antriebs und der Bremse durch die Achssteuerung sind in sicherer Technik ausgebildet, insbesondere redundant, vorzugsweise diversitär.

Fig. 2 zeigt ein Verfahren zum Bremsen der Roboterachsanordnung der Fig. 1 nach einer Ausführung der vorliegenden Erfindung, wie es durch das Steuermittel in Form der Achssteuerung 6 durchgeführt wird.

In einem Schritt S10 steuert die Achssteuerung 6 den Aktuator 5.4 der Bremse auf Basis einer Betriebsausnahme, beispielsweise eines Notstops N, an, um ein Bremsmoment $T_{B,s}$ aufzuprägen. Somit wird die zusätzliche Haltebremse zum Stillsetzen der Achse A infolge eines Notstops (S10: "Y") geschlossen.

Insbesondere in einer solchen Situation kann die Struktur des Roboters und/oder der Bremse dynamisch hochbelastet werden: sobald die Bremse schließt, wird die Abtriebswelle 1 kurzfristig mit der vollen Trägheit der Achse A, insbesondere des sich mit hoher Geschwindigkeit bewegenden Roboterglieds 2.1, belastet.

Daher wird in einem Schritt S20 bei geschlossener Bremse, insbesondere während des gesamten Bremsens bis zu einem Stillstand der Achse A, das Soll-Antriebsmoment $T_{M,s}$ des Elektromotors 4.1, 4.2 auf Basis des in der Abtriebswelle 1 wirkenden, von dem Drehmomentsensor 7 ermittelten Drehmoments T vorgegeben, das seinerseits von der aktuellen Ist-Bremskraft $T_{B,i}$ abhängt.

In einer Ausführung wird das Soll-Antriebsmoment $T_{M,s}$ beispielsweise proportional zu einer Differenz $\Delta = T_{max} - |T|$ zwischen dem Drehmoment T und einem vorgegebenen Grenzwert $T_{max}$ vorgegeben:

$$T_{M,s} = \Psi_M(T_{M,i}, \Delta)$$

mit dem aktuellen Ist-Antriebsmoment $T_{M,i}$ und einer in der Achssteuerung 6 hinterlegten Funktion $\Psi_M$, die bei Überschreiten des Grenzwerts $T_{max}$, i.e. $\Delta < 0$, ein zur Bremse gegensinniges, der Verzögerung der Achse A entgegenwirkendes Antriebsmoment aufprägt. Dadurch wird das Abbremsen verzögert und so die Belastung reduziert. Mit anderen Worten kompensiert der Elektromotor 4.1, 4.2 einen Teil des Bremsmoments der geschlossenen Bremse 5.1 - 5.4 und reduziert so die Verzögerung der Achse A und damit insbesondere die Belastung der Abtriebswelle 1. Dies kann insbesondere dann vorteilhaft sein, wenn die Bremse nur vollständig öffen- und schließbar ist, ohne die Bremskraft dazwischen vorgeben zu können.

Ist die Bremskraft hingegen steuerbar, kann zusätzlich oder alternativ die Achssteuerung 6 auch die Bremse entsprechend regeln, beispielsweise gemäß einer in der Achssteuerung 6 hinterlegten Funktion $\Psi_B$, die bei Überschreiten des Grenzwerts $T_{max}$, i.e. $\Delta < 0$, das Bremsmoment reduziert. Dadurch wird das Abbremsen ebenfalls verzögert und so die Belastung reduziert:

$$T_{B,s} = \Psi_B(T_{B,i}, \Delta)$$

Die Funktionen $\Psi_M$, $\Psi_B$ können ein, insbesondere dynamisches, Modell der Roboterachsanordnung enthalten, um die Dynamik der Roboterachsanordnung, insbesondere deren Trägheit, zu berücksichtigen. Das Ist-Antriebsmoment $T_{M,i}$ bzw. Ist-Bremsmoment $T_{B,i}$ kann beispielsweise gemessen oder durch einen Beobachter abgeschätzt werden. In einer anderen Ausführung kann es auch unberücksichtigt bleiben, d.h. $T_{M,s} = \Psi_M(\Delta)$ bzw. $T_{B,s} = \Psi_B(\Delta)$.

In der Abtriebswelle 1 summieren sich Brems- und Antriebsmoment $T_{B,i}$, $T_{M,i}$. Indem das Bremsmoment durch entsprechende Soll-Werte $T_{B,s}$ wenigstens phasenweise heruntergeregelt und/oder durch entsprechende, gegensinnige Soll-Wert-Vorgaben $T_{M,s}$ für den Antrieb teilweise kompensiert wird, reduziert sich die Belastung der Abtriebswelle 1, der Lager 3 etc.:

$$T = T_{B,i} + T_{M,i} \approx T_{B,s} + T_{M,s}$$

Eine sehr einfache Funktion $\Psi_B$ kann beispielsweise eine Proportionalregelung implementieren:

$$T_{B,s} = \begin{cases} T_{B,max} + K_P \cdot \Delta \Leftrightarrow \Delta < 0; \\ T_{B,max} \Leftrightarrow \Delta \geq 0 \end{cases}$$

mit der Proportionalverstärkung $K_P$ und dem maximalen Bremsmoment $T_{B,max}$, das aufgeprägt wird, solange das von dem Drehmomentsensor 7 ermittelte Drehmoment T in der Abtriebswelle 1 den Grenzwert $T_{max}$ nicht überschreitet. Eine sehr einfache Funktion $\Psi_M$ kann in gleicher Weise ausgebildet sein, um das Gesamtdrehmoment T in der Abtriebswelle 1 zu reduzieren.

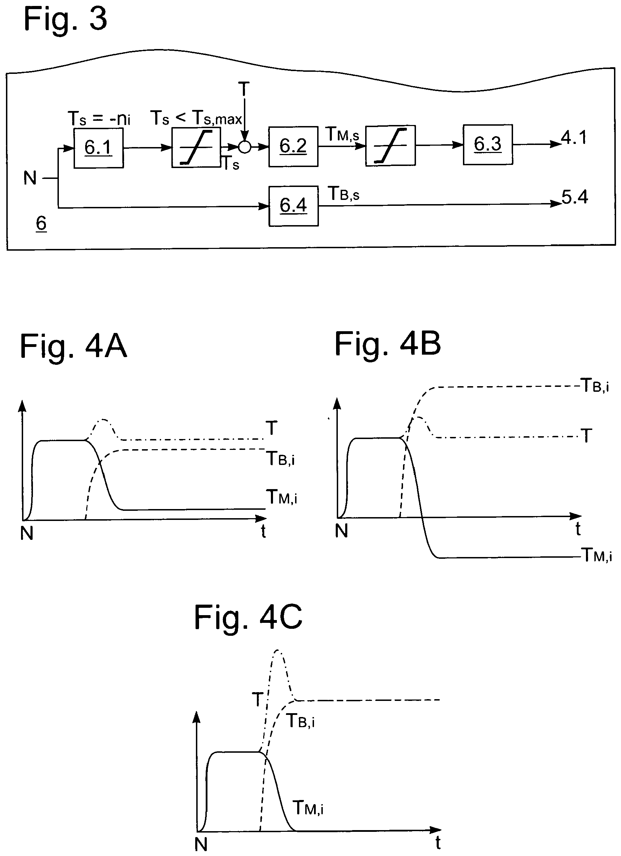

Fig. 3 zeigt einen Teil des Steuermittels der Roboterachsanordnung der Fig. 1 gemäß einer Abwandlung der vorstehend erläuterten Ausführung.

In dieser Abwandlung weist das Steuermittel 6 einen Drehzahlregler 6.1 auf, der bei einem Notstop N aus der Differenz zwischen Soll- und Ist-Drehzahl $n_i$ der Abtriebswelle 1 ein Soll-Bremsmoment $T_s$ bestimmt (beispielsweise proportional zur abzubauenden Ist-Drehzahl ($T_s$ = - $K_P$ $n_i$) und begrenzt auf einen Maximalbetrag ($T_s$ < $T_{s,max}$)) und einem Momentenregler 6.2 zuführt. Der Momentenregler 6.2 vergleicht das von dem Drehmomentsensor 7 erfasste Ist-Drehoment T in der Abtriebswelle mit diesem Soll-Bremsmoment $T_s$ und gibt einen entsprechenden Soll-Stromwert nach Begrenzung auf einen Maximalwert an einen Stromregler 6.3, der seinerseits den Stator 4.1 des Elektromotors versorgt.

Parallel zu diesem Zweig weist das Steuermittel 6 eine Bremsensteuerung 6.4 auf, die die Bremse 5.1-5.4 schließt, falls ein Notstop N erfasst worden ist.

Fig. 4A - 4C zeigen zeitliche Verläufe des Drehmoments T (strichpunktiert in Fig. 4) sowie der Ist-Drehomomente $T_{M,i}$ (ausgezogen in Fig. 4) und $T_{B,i}$ (strichliert in Fig. 4) des Elektromotors bzw. der Bremse in der Roboterachsanordnung der Fig. 1, wie sie durch das Steuermittel 6 der Fig. 3 verwirklicht werden. Dabei wird zum Zeitpunkt t = 0 jeweils ein Notstop N initiiert.

Im Beispiel der Fig. 4A kommandiert daraufhin der Drehzahlregler 6.1 aufgrund der Differenz zwischen Ist-Drehzahl und der Soll-Drehzahl 0 ein maximales Soll-Bremsmoment $T_{s,max}$, das der Momentenregler 6.2 durch entsprechende bremsende Steuerung des Elektromotors zu bewirken sucht. Entsprechend steigt das Ist-Drehomomente $T_{M,i}$ des Elektromotors zunächst stark an.

Mit trägheitsbedingter Verzögerung schließt auch die Bremsensteuerung 6.4 die Bremse 5.1-5.4, so dass das Ist-Drehoment $T_{B,i}$ der Bremse zeitlich verzögert ebenfalls ansteigt. Durch die mechanische Aufsummierung beider Ist-Drehmomente $T_{M,i}$ und $T_{B,i}$ kommt es zu einem kurzzeitigen Überschwingen des Drehmoments T in der Abtriebswelle 1. Dies erfasst der Drehmomentsensor 7. Entsprechend reduziert der Momentenregler 6.2 das vom Elektromotor aufzubringende Bremsmoment, die Bremse übernimmt in der Folge im Wesentlichen das Abbremsen der Abtriebswelle und wird hierbei durch den gleichsinnig wirkenden Antrieb unterstützt.

Im Beispiel der Fig. 4B übt die einfallende Bremse ein stärkeres Bremsmoment aus, was zu einem dauernden Überschreiten eines zulässigen Bremsmoments in der Abtriebswelle 1 führen würde. Entsprechend prägt hier der Momentenregler 6.2 durch den Elektromotor ein zum Drehmoment der Bremse gegensinniges Drehmoment auf.

Im Beispiel der Fig. 4C ist nur ein gleichsinniges Wirken des Antriebs zugelassen. Entsprechend reduziert der Momentenregler 6.2 das vom Elektromotor aufzubringende Bremsmoment auf Null.

Bezugszeichenliste

| | |
|---|---|
| A | Roboterachse |
| N | Notstop (Betriebsausnahme) |
| 1 | Abtriebswelle (Abtriebsglied) |
| 2.1, 2.2 | Roboterglied |
| 3 | Lager |
| 4.1 | Stator |
| 4.2 | Rotor |
| 4.3, 4.4 | Zahnräder (Getriebe) |
| 5.1 | Feder |
| 5.2 | Bremsscheibe (Bremsglied) |
| 5.3 | Bremsbelag (Bremsglied) |
| 5.4 | Elektromagnet (Aktuator) |
| 6 | Achssteuerung (Steuermittel) |
| 6.1 | Drehzahlregler |
| 6.2 | Momentenregler |
| 6.3 | Stromregler |
| 6.4 | Bremsensteuerung |
| 7 | Drehmomentsensor (Erfassungsmittel) |

**Patentansprüche**

1. Verfahren zum Bremsen einer Roboterachsanordnung mit wenigstens einem Abtriebsglied (1), mit den Schritten:

Aufprägen einer Bremskraft auf das Abtriebsglied durch eine Bremse (5.1-5.4);
und dabei
Steuern einer Antriebskraft ($T_M$) eines auf das Abtriebsglied wirkenden Antriebs (4.1-4.4) wenigstens abschnittsweise während des Bremsens gegensinnig zur Bremse auf Basis einer dynamischen Größe (T) des Abtriebsglieds, welche von der Bremskraft abhängt, und/oder der Bremskraft ($T_B$) auf Basis einer Differenz zwischen einer von der Bremskraft abhängigen und eine Kraft, insbesondere ein Drehmoment (T), des Abtriebsglieds umfassenden dynamischen Größe (T) des Abtriebsglieds und einem vorgegebenen Grenzwert.

2. Verfahren nach dem vorhergehenden Anspruch, **dadurch gekennzeichnet, dass** die dynamische Größe eine Kraft, insbesondere ein Drehmoment (T), und/oder Bewegungsgröße, insbesondere eine Beschleunigung, des Abtriebsglieds umfasst.

3. Verfahren nach einem der vorhergehenden Ansprüche, **dadurch gekennzeichnet, dass** die Antriebskraft auf Basis einer Differenz zwischen der dynamischen Größe und einem vorgegebenen Grenzwert gesteuert wird.

4. Verfahren nach einem der vorhergehenden Ansprüche, **dadurch gekennzeichnet, dass** die Antriebs- und/oder die Bremskraft auf Basis eines Modells der Roboterachsanordnung gesteuert wird.

5. Verfahren nach einem der vorhergehenden Ansprüche, **dadurch gekennzeichnet, dass** die Bremskraft auf Basis einer Betriebsausnahme (N) aufgeprägt wird.

6. Verfahren nach einem der vorhergehenden Ansprüche, **dadurch gekennzeichnet, dass** die Bremse eine, insbesondere mechanische, hydraulische oder pneumatische, Haltebremse (5.1-5.4) zum Festlegen des Abtriebsglieds aufweist.

7. Verfahren nach einem der vorhergehenden Ansprüche, **dadurch gekennzeichnet, dass** der Antrieb und/oder die Bremse in sicherer Technik überwacht werden.

8. Verfahren nach einem der vorhergehenden Ansprüche, **dadurch gekennzeichnet, dass** die dynamische Größe und/oder wenigstens eine Steuergröße zum Steuern der Antriebs- und/oder die Bremskraft in sicherer Technik ermittelt und/oder die Antriebs- und/oder die Bremskraft in sicherer Technik gesteuert wird.

9. Roboterachsanordnung mit wenigstens einem Abtriebsglied (1), einer Bremse (5.1-5.4) zum Aufprägen einer Bremskraft auf das Abtriebsglied, einem Antrieb (4.1-4.4) zum Aufprägen einer Antriebskraft auf das Abtriebsglied, und einem Steuermittel (6) zum Steuern der Antriebskraft und/oder der Bremskraft auf Basis der dynamischen Größe des Abtriebsglieds, welche von der Bremskraft abhängt, wobei das Steuermittel zum Durchführen eines Verfahrens nach einem der vorhergehenden Ansprüche eingerichtet ist.

10. Roboterachsanordnung nach dem vorhergehenden Anspruch, mit einem Erfassungsmittel (7) zum Ermitteln der dynamischen Größe, insbesondere einer Kraft (T) und/oder einer Bewegungsgröße.

11. Roboterachsanordnung nach einem der Ansprüche 9 bis 10, **dadurch gekennzeichnet, dass** die Bremse eine, insbesondere mechanische, hydraulische oder pneumatische, Haltebremse (5.1-5.4) zum Festlegen des Abtriebsglieds aufweist.

12. Roboterachsanordnung nach einem der Ansprüche 9 bis 11, **dadurch gekennzeichnet, dass** das Steuer- und/oder Erfassungsmittel in sicherer Technik ausgebildet ist.

13. Roboterachsanordnung nach einem der Ansprüche 9 bis 12, **dadurch gekennzeichnet, dass** das Steuermittel zum Steuern der Antriebs- und/oder der Bremskraft einer einzigen Achse (A) ausgebildet und in einem Roboterglied (2.2) angeordnet ist, in dem der Antrieb und/oder die Bremse angeordnet ist.

14. Computerprogrammprodukt mit einem Programmcode, der auf einem von einem Computer lesbaren Medium gespeichert ist, umfassend Befehle, die bewirken, dass die Roboterachsanordnung nach einem der Ansprüche 9 bis 13 die Verfahrensschritte nach einem der Ansprüche 1 bis 8 ausführt.

**Claims**

1. A method of decelerating a robot axis arrangement having at least one output member (1), the method comprising the steps of:

   applying a braking force to the output member by means of a brake (5.1-5.4); and, in the course of this,
   controlling, during at least portions of the braking process and in the opposite direction to the brake, a driving force ($T_M$) of a drive (4.1-4.4) which acts on the output member,
   on the basis of a dynamic variable (T) of the output member which dynamic variable (T) is dependent on the braking force, and/or the braking force ($T_B$) on the basis of a difference between a dynamic variable (T) of the output member which depends on the braking force and which comprises a force of the output member, in particular a torque (T) of the output member, and a specified limit value.

**2.** The method according to the preceding claim, **characterised in that** the dynamic variable comprises a force, in particular a torque (T), and/or a movement variable, in particular an acceleration, of the output member.

**3.** The method according to any one of the preceding claims, **characterised in that** the driving force is controlled on the basis of a difference between the dynamic variable and a specified limit value.

**4.** The method according to any one of the preceding claims, **characterised in that** the driving force and/or the braking force is controlled on the basis of a model of the robot axis arrangement.

**5.** The method according to any one of the preceding claims, **characterised in that** the braking force is applied on the basis of an operating exception (N).

**6.** The method according to any one of the preceding claims, **characterised in that** the brake comprises a holding brake (5.1-5.4), in particular a mechanical, hydraulic or pneumatic holding brake (5.1-5.4), in order to immobilise the output member.

**7.** The method according to any one of the preceding claims, **characterised in that** the drive and/or the brake are monitored using secure technology.

**8.** The method according to any one of the preceding claims, **characterised in that** the dynamic variable and/or at least one control variable for controlling the driving force and/or the braking force is determined using secure technology and/or the driving force and/or the braking force is controlled using secure technology.

**9.** A robot axis arrangement comprising at least one output member (1), a brake (5.1-5.4) for applying a braking force to the output member, a drive (4.1-4.4) for applying a driving force to the output member, and a control means (6) for controlling the driving force and/or the braking force on the basis of the dynamic variable of the output member, which dynamic variable depends on the braking force, wherein the control means is arranged to carry out a method according to any one of the preceding claims.

**10.** The robot axis arrangement according to the preceding claim, comprising a detection means (7) for determining the dynamic variable, in particular a force (T) and/or a movement variable.

**11.** The robot axis arrangement according to any one of the claims 9 to 10, **characterised in that** the brake comprises a holding brake (5.1-5.4), in particular a mechanical, hydraulic or pneumatic holding brake (5.1-5.4), in order to immobilise the output member.

**12.** The robot axis arrangement according to any one of the claims 9 to 11, **characterised in that** the control means and/or the detection means is constructed in secure technology.

**13.** The robot axis arrangement according to any one of the claims 9 to 12, **characterised in that** the control means is constructed in order to control the driving force and/or the braking force of a single axis (A) and that it is arranged in a member (2.2) of the robot in which member (2.2) the drive and/or the brake is arranged.

**14.** A computer program product comprising a program code which is stored on a computer- readable medium, the program code comprising instructions which cause the robot axis arrangement according to any one of the claims 9 to 13 to perform the method steps according to any one of the claims 1 to 8.

**Revendications**

**1.** Procédé de freinage d'un système d'axe de robot avec au moins un organe de sortie (1), avec les étapes :

application d'une force de freinage sur l'organe de sortie par un frein (5.1-5.4) ;
et ce faisant
commande d'une force d'entraînement ($T_M$) d'un entraînement (4.1-4.4) agissant sur l'organe de sortie au moins par section pendant le freinage dans le sens opposé au frein sur la base d'une grandeur dynamique (T) de l'organe de sortie, laquelle dépend de la force de freinage, et/ou de la force de freinage ($T_B$) sur la base d'une différence entre une grandeur dynamique (T) de l'organe de sortie dépendant de la force de freinage et comprenant une force, en particulier un couple (T), de l'organe de sortie et une valeur limite prédéfinie.

**2.** Procédé selon la revendication précédente, **caractérisé en ce que** la grandeur dynamique comprend une force, en particulier un couple (T), et/ou une grandeur de mouvement, en particulier une accélération, de l'organe de sortie.

**3.** Procédé selon l'une quelconque des revendications précédentes, **caractérisé en ce que** la force d'entraînement est commandée sur la base d'une différence entre la grandeur dynamique et une valeur limite prédéfinie.

**4.** Procédé selon l'une quelconque des revendications précédentes, **caractérisé en ce que** la force d'entraînement et/ou la force de freinage est commandée sur la base d'un modèle du système d'axe de robot.

5. Procédé selon l'une quelconque des revendications précédentes, **caractérisé en ce que** la force de freinage est appliquée sur la base d'une exception de service (N).

6. Procédé selon l'une quelconque des revendications précédentes, **caractérisé en ce que** le frein présente un frein d'arrêt (5.1-5.4), en particulier mécanique, hydraulique ou pneumatique, pour l'immobilisation de l'organe de sortie.

7. Procédé selon l'une quelconque des revendications précédentes, **caractérisé en ce que** l'entraînement et/ou le frein est surveillé selon une technique sûre.

8. Procédé selon l'une quelconque des revendications précédentes, **caractérisé en ce que** la grandeur dynamique et/ou au moins une grandeur de commande pour la commande de la force d'entraînement et/ou la force de freinage est déterminée selon une technique sûre et/ou la force d'entraînement et/ou la force de freinage est commandée selon une technique sûre.

9. Système d'axe de robot avec au moins un organe de sortie (1), un frein (5.1-5.4) pour l'application d'une force de freinage sur l'organe de sortie, un entraînement (4.1-4.4) pour l'application d'une force d'entraînement sur l'organe de sortie, et un moyen de commande (6) pour la commande de la force d'entraînement et/ou de la force de freinage sur la base de la grandeur dynamique de l'organe de sortie, laquelle dépend de la force de freinage, dans lequel le moyen de commande est aménagé pour la réalisation d'un procédé selon l'une quelconque des revendications précédentes.

10. Système d'axe de robot selon la revendication précédente, avec un moyen de détection (7) pour la détermination de la grandeur dynamique, en particulier d'une force (T) et/ou d'une grandeur de mouvement.

11. Système d'axe de robot selon l'une quelconque des revendications 9 à 10, **caractérisé en ce que** le frein présente un frein d'arrêt (5.1-5.4), en particulier mécanique, hydraulique ou pneumatique, pour l'immobilisation de l'organe de sortie.

12. Système d'axe de robot selon l'une quelconque des revendications 9 à 11, **caractérisé en ce que** le moyen de commande et/ou de détection est réalisé selon une technique sûre.

13. Système d'axe de robot selon l'une quelconque des revendications 9 à 12, **caractérisé en ce que** le moyen de commande est réalisé pour la commande de la force d'entraînement et/ou de la force de freinage d'un seul axe (A) et est agencé dans un organe de robot (2.2), dans lequel l'entraînement et/ou le frein est agencé.

14. Produit de programme informatique avec un code de programme, qui est enregistré sur un support lisible par un ordinateur, comprenant des ordres, qui amènent le système d'axe de robot selon l'une quelconque des revendications 9 à 13, à exécuter les étapes de procédé selon l'une quelconque des revendications 1 à 8.

# Fig. 1

# Fig. 2

$$T_{M,s} = \Psi_M(T_{M,i}, \Delta)$$
$$T_{B,s} = \Psi_B(T_{B,i}, \Delta)$$

# Fig. 3

# Fig. 4A

# Fig. 4B

# Fig. 4C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1905552 A1
- WO 0162449 A1
- JP H06262565 B

**In der Beschreibung aufgeführte Nicht-Patentliteratur**

- **ARTIKEL Y. MINAMIYAMA ; T. KIYOTA.** Positioning of Rotary Pneumatic Actuator by Passive Dynamic Control. *IEEE/SICE Int. Symp. on Systems Integration,* 2012